# EUROPEAN PATENT SPECIFICATION

(11) **EP 0 395 288 B1**
(45) Date of publication and mention of the grant of the patent: **16.02.1994**
(21) Application number: 90304143.2
(22) Date of filing: 18.04.1990
(51) Int. Cl.: B65G 65/23, B65B 69/00

(54) **Method and apparatus for unloading boxes or the like**
Verfahren und Vorrichtung zum Entladen von Kisten oder dgl.
Méthode et dispositif pour décharger des caisses ou similaires

(30) Priority: 22.04.1989 GB 8909225
(43) Date of publication of application: 31.10.1990
(73) Proprietor: R J HERBERT ENGINEERING LTD, Wisbech,Cambs PE14 7DJ (GB)
(72) Inventor: Defty-Wallace Dr. John Lawrence, Wisbech, Cambs (GB); Herbert, Roderic Joseph, Wisbech, Cambs, PE 14 7DJ (GB)
(74) Representative: Archer, Philip Bruce

(56) References cited:
- CH-A- 632 209
- US-A- 3 279 635

## Description

This invention relates to a method and apparatus for unloading boxes or the like. The invention is particularly, but not exclusively, applicable to the unloading of vegetables, root crops and the like.

Previous proposals in relation to apparatus for unloading boxes and like containers include box lifting and tipping mechanisms on which a full box can be placed, for example by means of a forklift truck, the box then being raised and clamped and tipped, and finally returned empty to its former position for removal, followed by subsequent loading of another box.

Even if such a prior mechanism were automated, its capacity is somewhat limited by the inherent sequential nature of the loading and unloading stages, and the need to wait for one unloading cycle to be completed, followed by removal of the empty box from the apparatus, before the next cycle can be commenced.

While, of course, duplication of such apparatus would enable some of these limitations to be avoided, such duplication is inherently costly and not acceptable for the average small scale operator.

There is disclosed in US-A-3 279 635 apparatus for emptying the contents of a container or box in which the container or box is raised from a lowered position to a elevated unloading position, the box is completely inverted, rotated through 180 degrees and agitated or shaken so as to remove the contents therefrom. The box is then returned to its starting position.

Accordingly, there is a requirement for the provision of some means to improve the speed or efficiency of operation of apparatus for unloading boxes or the like, and an object of the present invention is to provide improvements in one or more of these respects, or generally.

According to the invention there is provided a method and apparatus for unloading boxes or the like as defined in the accompanying claims.

In a preferred embodiment, an automatic controlled discharge box unloader for vegetables and other products is adapted to leave the empty box from one unloading operation on a secondary platform, ready for removal, while allowing a full box to be placed on the movable main platform ready for emptying. The movable platform can be raised and lowered without interfering with the fixed secondary platform which is located (initially) above it. This is achieved by arranging for the shapes of the two platforms or supports to fit one within the other. The movable platform is generally H-shaped and the fixed platform comprises two pivotable rectangular supports which fit within the ends of the H.

In the preferred embodiment, the apparatus is capable of receiving a full box either on the upper and fixed secondary platform or support or on the lower movable platform or support, at the bottom of the apparatus. Likewise, an emptied box can be left at either position. This enables the operator to load a full box onto the machine before removing the emptied box, thus speeding up the unloading cycle.

Embodiments of the invention will now be described by way of example with reference to the accompanying drawings in which :-
Fig 1 shows a side elevation view of unloading apparatus ready to receive a full box for unloading;
Fig 2 shows a full box placed on the second platform of the apparatus;
Fig 3 shows the full box after lifting from the secondary platform and clamping to a flow control lid;
Fig 4 shows the box being tipped;
Fig 5 shows the box returned to its upright position prior to lowering;
Fig 6 shows the empty box retained on the upper secondary platform or support with a full box placed on the movable support at the bottom;
Fig 7 shows a front elevation view of the apparatus of Figs 1 to 6; and
Figs 8 and 9 show front elevation and plan views of the box support platforms or supports in their overlapping condition illustrating their interfitting structures whereby the movable main platform can move past the generally fixed secondary platform.

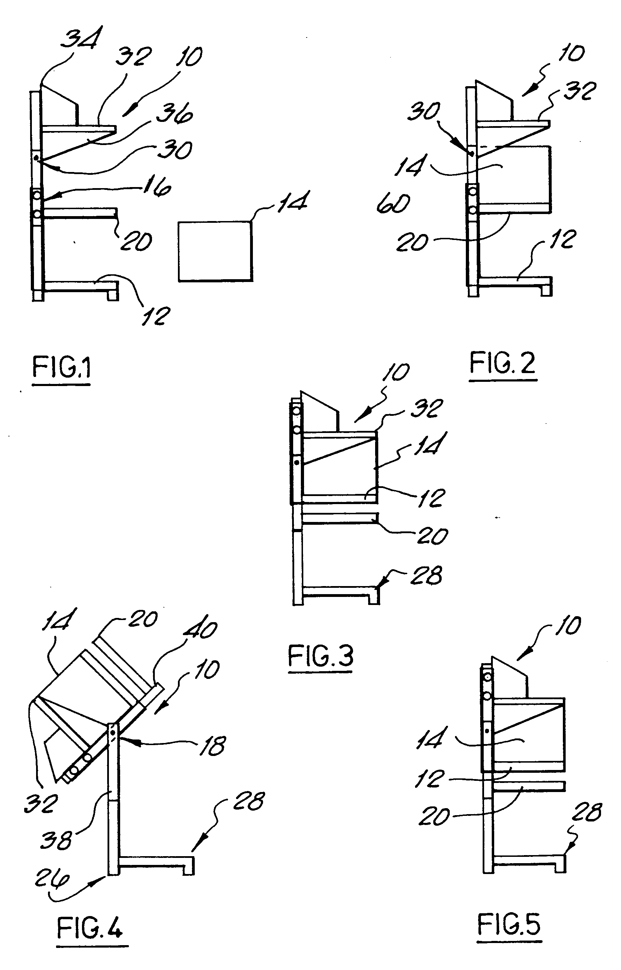

As shown in the drawings, an unloading mechanism 10 for boxes or the like comprises a first or main support or platform 12 to receive a box 14 or the like. A lift and lower mechanism 16 is provided for support 12, together with a tipping mechanism 18 therefor, whereby a raised box 14 supported on support 12 can be emptied as shown in Fig 4.

Lift and lower mechanism 16 and tipping mechanism 18 are both hydraulically operated. Alternative mechanisms could of course be provided such as, for example, electrical mechanisms. Control of the lift and lower and tipping operations is provided by control apparatus (not shown) incorporating hydraulic/electric control systems.

A second support 20 for a box 14 or the like is provided on mechanism 10 for a purpose to be described, and means 22 is further provided whereby the movable first support 12 can move past the second support 20 during use to pick up therefrom or to deposit thereon a box 14 or the like.

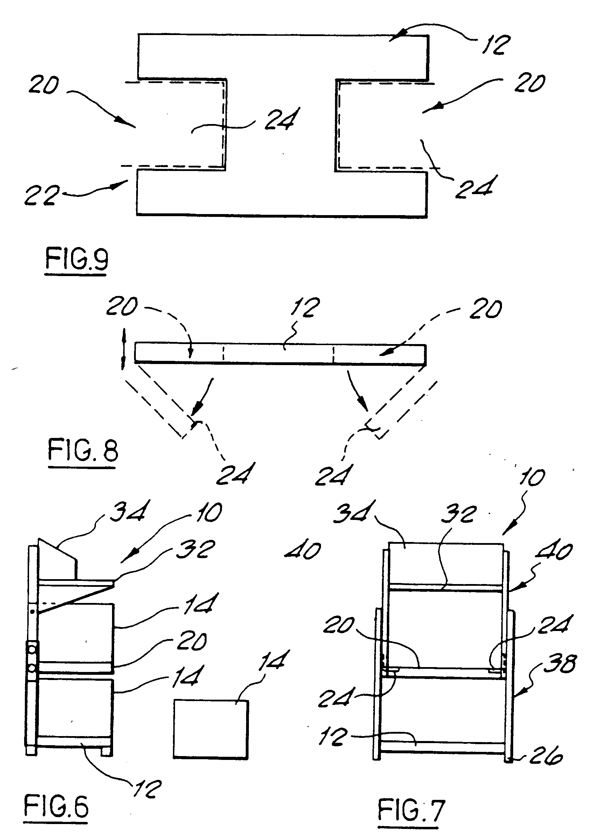

As shown in Fig 1, the second support 20 is located, except in the tipped configuration of the apparatus as shown in Fig 4, in a fixed position between the raised and lowered positions of the first support 12, these latter positions being shown in Figs 5 and 1 respectively.

The means 22 whereby support 12 can move past support 22 includes means for moving the second support 20 out of the volume described by a box 14 raised and lowered on the support 12. This means is best described by reference to Figs 8 and 9 of the drawings.

As shown in Figs 8 and 9, movable support 12 is generally H-shaped as seen in plan view and fixed support 20 comprises two rectangular portions 24 which fit within the ends of the H. A pivot mechanism is provided to enable portions 24 to be pivoted up and down, as indicated in Fig 8, so as to permit a box carried on support 12 to move past them.

Other details of apparatus 10 are believed to be self-evident or indicated in the drawings. The frame 26 of apparatus 10 stands on a base structure 28. Tipping is effected about a pivot axis 30. The box 14 is clamped by movable support 12 against a lid 32 having a delivery chute 34 and side flanges 36. Frame 26 comprises a lower fixed portion 38 and an upper tipping portion 40.

In use, a box 14 is loaded, in full condition, either on support 12 or on support 20. If the latter, as shown in Fig 2, support 12 is then raised and passes between supports 20, engages the bottom of the box and lifts it up to clamp it against lid 32 as shown in Fig 3. The tip mechanism then operates and the box is emptied as shown in Fig 4. It then returns to the upright attitude shown in Fig 5. Support 12 is then lowered. Then, depending upon whether supports 12 are in their inward or outward position, the empty box will then be either deposited on them or will pass through to the bottom of the apparatus. If the former of these two options, then a further full box can be placed on support 12 as soon as it reaches the bottom. Moreover, the step of removing the empty box from support 20 can commence even before the support 12 reaches its bottom position. As soon as the full box is positioned on the apparatus, or the empty box is removed, the cycle can recommence. Recommencement could be automatically initiated by load sensors detecting the presence of a full box and the absence of an empty box. If the empty box is taken through to the lower position at the end of the unloading cycle, the next full box can be placed on the supports 20 as soon as the empty box has passed through them. Then, the cycle can recommence immediately the empty box is removed.

Interestingly, the above embodiment provides the advantage of always offering space for loading a full box before removal of the empty box. In this way, handling operations are reduced. If an empty box is delivered to the bottom position, a full box can be loaded at the middle position during the last stage of lowering, thereby achieving a time saving. Broadly speaking, the provision of dual loading and unloading facilities provides greater flexibility of operation and minimises waiting time, thereby improving efficiency.

Amongst other modifications which could be made in the above embodiment while remaining within the scope of the invention are the provision of automatic control means for the various machine functions, a simple flip-up mechanism for the supports of the secondary platform 20, whereby it allows a box to pass through them in the upward direction, while automatically removing and supporting same when the box returns.

## Claims

1. An unloading mechanism for boxes or the like comprising :-
a) a support (12) to receive a box (14) or the like;
b) a lift and lower mechanism (16) for said support; and
c) a tipping mechanism (18) for said support (12) whereby a raised box (14) supported thereon can be emptied;
characterised by
d) a second support (20) for a box (14) or the like;
e) means (22) whereby said one support (12) can move past said second support (20) during use to pick up therefrom or deposit thereon a box (14) or the like;
f) said means (22) comprising providing said one support (12) so that it can be raised and lowered without interfering with said second support (20).

2. A mechanism according to claim 1 characterised by said second support 20 being located in a fixed position between the raised and lowered positions of said one support (12).

3. A mechanism according to claim 1 or claim 2 characterised by said means whereby said one support (12) can move past said second support (20) comprising means (22) to move said second support (20) out of the volume described by a box (14) raised and lowered on said one support (12).

4. A mechanism according to claim 3 characterised by said means to move said second support (20) comprising a pivot mechanism.

5. A mechanism according to any one of claims 1 to 4 characterised by said means whereby said one support (12) can move past said second support (20) comprising forming said first and second supports so that one fits within spaces defined by the other.

6. Apparatus according to claim 5 characterised by said one support (12) being generally H-shaped and said second support (20) being generally rectangular so as to fit within the spaces at the ends of said H.

7. A method of unloading boxes or the like characterised by providing an unloading mechanism according to one of the claims 1 to 6 and causing said mechanism to lift and tip and lower a box (14) or the like, and causing said one support (12) to move past said support (20) during use so as to pick up therefrom or deposit thereon a box (14) or the like.

8. A method according to claim 7 characterised by the step of placing a loaded box (14) or the like on said one support (12) and subsequently removing said box (14) after unloading from said second support (20).

9. A method according to claim 7 characterised by the step of placing a loaded box on said second support (20), raising said one support (12) and lifting said loaded box (14) from said second support (20) thereby, and unloading the box (14).

## Patentansprüche

1. Entladevorrichtung für Kisten oder dergleichen, die folgendes umfaßt:
a) einen Träger (12) zur Aufnahme einer Kiste (14) oder dergleichen;
b) eine Hebe- und Senkvorrichtung (16) für den Träger; und
c) eine Kippvorrichtung (18) für den Träger (12), mit der eine angehobene, von diesem getragene Kiste (14) geleert werden kann;
gekennzeichnet durch
d) einen zweiten Träger (20) für eine Kiste (14) oder dergleichen;
e) Mittel (22), mit denen sich beim Einsatz der eine Träger (12) am zweiten Träger (20) vorbeibewegen kann, um von ihm eine Kiste (14) oder dergleichen aufzunehmen oder sie darauf abzusetzen;
f) wobei diese Mittel (22) das Bereitstellen des einen Trägers (12) umfassen, so daß er ohne Behinderung des zweiten Trägers (20) angehoben und gesenkt werden kann.

2. Vorrichtung nach Anspruch 1, dadurch gekennzeichnet, daß der zweite Träger (20) in einer ortsfesten Stellung zwischen der angehobenen und gesenkten Stellung des einen Trägers (12) angebracht ist.

3. Vorrichtung nach Anspruch 1 oder 2, dadurch gekennzeichnet, daß die Mittel, mit denen sich der eine Träger (12) am zweiten Träger (20) vorbeibewegen kann, Mittel (22) umfassen, um den zweiten Träger (20) aus dem von einer auf dem einen Träger (12) angehobenen und gesenkten Kiste (14) beschriebenen Volumen zu bewegen.

4. Vorrichtung nach Anspruch 3, dadurch gekennzeichnet, daß die Mittel zum Bewegen des zweiten Trägers (20) eine Schwenkvorrichung umfassen.

5. Vorrichtung nach einem der Ansprüche 1 bis 4, dadurch gekennzeichnet, daß die Mittel, mit denen sich der eine Träger (12) am zweiten Träger (20) vorbeibewegen kann, das Ausbilden des ersten und zweiten Trägers umfassen, so daß einer in vom anderen definierte Räume paßt.

6. Einrichtung nach Anspruch 5, dadurch gekennzeichnet, daß ein Träger (12) allgemein H-förmig und der zweite Träger (20) allgemein rechteckig ist, so daß er in die Räume an den Enden des H paßt.

7. Verfahren zum Entladen von Kisten oder dergleichen, dadurch gekennzeichnet, daß eine Entladevorrichtung nach einem der Ansprüche 1 bis 6 bereitgestellt wird und diese Vorrichtung dazu veranlaßt wird, eine Kiste (14) oder dergleichen zu heben, zu kippen und zu senken, und der eine Träger (12) dazu veranlaßt wird, sich beim Einsatz am Träger (20) vorbeizubewegen, um von ihm eine Kiste (14) oder dergleichen aufzunehmen oder sie darauf abzusetzen.

8. Verfahren nach Anspruch 7, gekennzeichnet durch den Schritt, eine aufgeladene Kiste (14) oder dergleichen auf den einen Träger (12) zu stellen und anschließend die Kiste (14) nach dem Entladen von dem zweiten Träger (20) zu entfernen.

9. Verfahren nach Anspruch 7, gekennzeichnet durch den Schritt, eine aufgeladene Kiste auf den zweiten Träger (20) zu stellen, den einen Träger (12) anzuheben und die aufgeladene Kiste (14) dadurch von dem zweiten Träger (20) zu heben und die Kiste (14) zu entladen.

## Revendications

1. Mécanisme de déchargement de caisses ou similaires comprenant:
a) un support (12) pour recevoir une caisse (14) ou similaire;
b) un mécanisme (16) pour lever et abaisser ledit support; et
c) un mécanisme de basculement (18) dudit support (12) grâce auquel une caisse (14) levée et supportée sur celui-ci peut être vidée;
caractérisé par
d) un second support (20) pour une caisse (14) ou similaire;
e) des moyens (22) grâce auxquels ledit premier support (12) peut se déplacer au-delà dudit second support (20) pendant l'utilisation pour retirer de ce dernier ou placer sur ce dernier une caisse (14) ou similaire;
f) lesdits moyens (22) comprenant l'installation dudit premier support (12) de sorte qu'il puisse être levé et abaissé indépendamment dudit second support (20).

2. Mécanisme selon la revendication 1, caractérisé par le fait que ledit second support (20) est situé en position fixe entre les positions levée et abaissée dudit premier support (12).

3. Mécanisme selon la revendication 1 ou la revendication 2, caractérisé par le fait que lesdits moyens, grâce auxquels ledit premier support (12) peut se déplacer au-delà dudit second support (20), comprennent des moyens (22) pour déplacer ledit second support (20) hors du volume défini par une caisse (14) levée et abaissée sur ledit premier support (12).

4. Mécanisme selon la revendication 3, caractérisé par le fait que lesdits moyens pour déplacer ledit second support (20) comprennent un mécanisme de pivot.

5. Mécanisme selon l'une quelconque des revendications 1 à 4, caractérisé par le fait que lesdits moyens, grâce auxquels ledit premier support (12) peut se déplacer au-delà dudit second support (20), comprennent la formation desdits premier et second supports de sorte que l'un s'emboîte dans des espaces définis par l'autre.

6. Appareil selon la revendication 5, caractérisé par le fait que ledit premier support (12) est généralement en forme de H que ledit second support (20) est généralement rectangulaire de sorte qu'il puisse s'emboîter dans les espaces aux extrémités dudit H.

7. Procédé de déchargement de caisses ou similaires, caractérisé par le fait de prévoir un mécanisme de déchargement selon l'une des revendications 1 à 6, et de faire en sorte que ledit mécanisme lève, bascule et abaisse une caisse (14) ou similaire, et de faire en sorte que ledit premier support (12) se déplace au-delà dudit support (20) pendant l'utilisation de façon à retirer de ce dernier ou à placer sur ce dernier une caisse (14) ou similaire.

8. Procédé selon la revendication 7, caractérisé par l'étape consistant à placer une caisse chargée (14) ou similaire sur ledit premier support (12) et à ensuite retirer ladite caisse (14), après déchargement dudit second support (20).

9. Procédé selon la revendication 7, caractérisé par l'étape consistant à placer une caisse chargée sur ledit second support (20), à lever ledit premier support (12) et à lever ladite caisse chargée (14) dudit second support (20) par ce biais, et à décharger la caisse (14).
